# EUROPÄISCHE PATENTANMELDUNG

(11) **EP 1 191 718 A2**
(43) Veröffentlichungstag der Anmeldung: **27.03.2002**
(21) Anmeldenummer: 01120353.6
(22) Anmeldetag: 24.08.2001
(51) Int. Cl.: H04B 10/155

(54) **Verfahren und Anordnung zur Verbesserung der Qualität eines modulierten optischen Übertragungssignals**

(30) Priorität: 21.09.2000 DE 10046941
(71) Anmelder: SIEMENS AKTIENGESELLSCHAFT, 80333 München (DE)
(72) Erfinder: Glingener, Christoph, Dr., 83620 Feldkirchen-Westerham (DE); Gottwald, Erich, Dr., 83607 Holzkirchen (DE)

(57) **Zusammenfassung**

In einer Signalerzeugungseinheit (SCU) wird mindestens ein optisches Signal (os) mit einer hinsichtlich der Trägersignalfrequenz (Ft) um die die Brillouin-Frequenzverschiebung (ΔF) reduzierten Frequenz erzeugt und entgegen der Übertragungssignalrichtung (GUER) am Ende der optischen Übertragungsfaser eingekoppelt, so daß der Trägersignalanteil (Ft) des modulierten optischen Übertragungssignals (os) reduziert wird.

## Beschreibung

Verfahren und Anordnung zur Verbesserung der Signalqualität eines modulierten optischen Übertragungssignals

Bei optischen Übertragungssystemen mit Datenraten von 20 Gbit/s und mehr trägt bei digitalen amplitudenmodulierten optischen Signalen bzw. Übertragungssignalen ein geringes Extinktionsverhältnis, insbesondere in optischen Weitverkehrssystemen mit optischen Verstärkern erheblich dazu bei, daß das empfangsseitig zur Rekonstruktion der Daten erforderliche optische Signal-zu-Rauschverhältnis ("signal-to-noise-ratio"-OSNR) verschlechtert wird. Das Extinktionsverhältnis ergibt sich aus dem Leistungsverhältnis zwischen logischer 0-Signalleistung und logischer 1-Signalleistung, d.h. ein amplitudenmoduliertes Signal mit einem hohen, die Hälfte der Gesamtleistung des optischen Übertragungssignals übersteigenden Continuous-Wave-Anteil bzw. Trägersignalanteil weist ein niedriges Extinktionsverhältnis und ein nahezu vollständig "durchmoduliertes" Signal ein sehr hohes Extinktionsverhältnis auf.

Bei amplitudenmodulierten optischen Übertragungssignalen kann durch gezielte Filterung, d.h. Reduzierung, des Trägersignals die Signalqualität des optischen Signals erheblich verbessert werden. Somit wird das Extinktionsverhältnis des amplitudenmodulierten optischen Übertragungssignals erhöht und damit die Anforderungen an das Signal-zu-Rauschverhältnis des amplitudenmodulierten optischen Übertragungssignals erheblich verringert. Eine Verringerung des Signal-zu-Rauschverhältnisses wirkt sich in einer Erhöhung der regenerationsfrei überbrückbaren Übertragungsreichweite oder auch wegen des aufgrund der verringerten Anforderungen möglichen geringeren Übertragungspegels in einer Minimierung des Einflusses von störenden nichtlinearen Effekten aus.

Aus der Veröffentlichung von H. Kawakami, et al.: "Overmodulation of intensity modulated signals due to stimulated Brillouin Scattering", Electronic Letters, 1. September 1994, Vol. 30, No. 18, Seiten 1507 bis 1509 ist bekannt, daß die stimulierte Brillouin Streuung (SBS) in optischen Übertragungsfasern Signalverzerrungen bei modulierten optischen Übertragungssignalen hervorruft. Überschreitet die Amplitude bzw. Leistung beispielsweise des Trägersignalanteils des amplitudenmodulierten optischen Übertragungssignals eine kritische SBS-Schwelle bzw. die sogenannte "critical SBS-freshhold", so tritt eine Rückstreuung des Trägersignalanteils in Gegenübertragungsrichtung in der optischen Übertragungsfasern auf. Die Frequenz des rückgestreuten Trägersignalanteils ist aufgrund des stimulierten Brillouin Effektes um die "Brillouin Shift" bzw. "Stokes Shift" um ca. 10 bis 15 GHz reduziert - siehe hierzu auch G.P. Argrawal, "Fiber Optic Communications", John Wiley & Sons INC.,1997, Seiten 385 bis 390. Aufgrund des frequenzverschobenen rückgestreuten Trägersignalanteils, die zu einer Reduzierung der spektralen Energiedichte des Trägersignalanteils führt, tritt eine Übermodulation ("Overmodulation") des amplitudenmodulierten optischen Übertragungssignals auf, wodurch die "Augenöffnung" des amplitudenmodulierten optischen Übertragungsignals verschlechtert wird.

Aus dem Artikel von S. Tonda-Goldstein, et al.: "Stimulated Brillouin scattering for microwave signal modulation depth increase in optical links", Electronic's Letters, 25. Mai 2000, Vol.36, No. 11, Seite 944 bis 946 ist ein Verfahren zur Reduktion des Trägersignals eines modulierten optischen "Radio-Frequency"-Übertragungssignales mit Hilfe der stimulierten Brillouin Streuung" bekannt, wobei das modulierte optische Übertragungssignal einen erhöhten Gleichanteil bzw. Trägeranteil aufweist. Zum nahezu vollständigen Reduzierung des erhöhten Trägeranteils wird der nichtlineare Effekt der "stimulierten Brillouin Streuung" verwendet, aufgrund dessen sich eine akustische Welle in Übertragungsrichtung in der optischen Faser bzw. Übertragungsfaser ausbildet, durch die der Trägeranteil des amplitudenmodulierten optischen Übertragungssignals rückgestreut und somit reduziert wird. Durch die Schmalbandigkeit des Filtereffektes (ca. einige 10 MHz) werden die die Dateninformationen beinhaltenden Seitenbänder des modulierten optischen Übertragungssignals oberhalb der Frequenzen von einigen 10 MHz hinsichtlich ihrer Amplitude nahezu unbeeinflußt. Alternativ kann eine geeignete Codierung des modulierten optischen Übertragungssignals verwendet werden, die die im Bereich bis zu einigen 10 MHz liegenden Spektralanteile der Seitenbänder des modulierten optischen Übertragungssignals unterdrückt. Mit Hilfe des vorgestellten Verfahrens kann eine Dämpfung des optischen Trägeranteils von nahezu 40 dB erzielt werden. Durch die in der optischen Faser sich ausbildenden Effekt der SBS wird ein Teil des modulierten, in die optische Faser eingekoppelten optischen Übertragungssignals rückgestreut, wobei das rückgestreute optische Signal eine Brillouin-Frequenzverschiebung von ca. 10 bis 15 GHz im Vergleich zum eingekoppelten modulierten optischen Übertragungssignals aufweist. Das rückgestreute und frequenzverschobene optische Signal wird am Eingang der optischen Übertragungsfaser mit Hilfe eines Zirkulators ausgekoppelt und über eine separat angeordnete optische Verbindungsfaser am Ende der optischen Übertragungsstrecke mit Hilfe einer optischen, eine Dämpfung von ca. 3dB aufweisenden Koppeleinheit eingekoppelt. Mit Hilfe des eingekoppelten, eine Frequenzverschiebung von ca. 10 bis 15 GHz aufweisenden optischen Signals wird der stimulierte Brillouin Effekt in der beispielsweise eine Länge von 10 km aufweisenden Single-Mode-Faser verstärkt, d.h. insbesondere das durch den SBS-Effekt erzeugte akustisches Filter ("acoustic grating") wird verstärkt, welches den Trägeranteil des amplitudenmodulierten optischen Übertragungssignals reduziert. Eine derartige Rückkopplung des aufgrund der SBS frequenzverschobenen und rückgestreuten optischen Signals mit Hilfe einer zusätzlichen Rückkoppelfaser ist für bereits bestehende optische Übertragungsfaser nur mit einem hohen technischen und finanziellen Aufwand zu realisieren.

Die der Erfindung zugrunde liegende Aufgabe besteht darin, die Verbesserung der Signalqualität eines modulierten, ein Trägersignal aufweisenden optischen Übertragungssignals zu vereinfachen. Die Aufgabe wird ausgehend durch ein Verfahren gemäß den Merkmalen des Patentanspruches 1 oder 10 gelöst.

Der wesentliche Aspekt des erfindungsgemäßen Verfahrens ist darin zu sehen, daß in einer Signalerzeugungseinheit mindestens ein optisches Signal mit einer hinsichtlich der Trägersignalfrequenz um die die Brillouinfrequenzverschiebung reduzierten Frequenz erzeugt wird, welches in die optische Übertragungsfaser entgegen der Übertragungssignalrichtung eingekoppelt wird, so daß das Trägersignal des modulierten optischen Übertragungssignales reduziert wird. Vorteilhaft wird hierdurch beispielsweise am Ende der Übertragungsfaser ein optisches Signal erzeugt, daß zur Verstärkung des in der optischen Übertragungsfaser sich ausbildenden schmalbandigen "acoustic gratings" am Ende der optischen Übertragungsfaser entgegen der Übertragungssignalrichtung eingekoppelt wird. Das optische Signal bzw. Pumpsignal wird somit auf einfache Art und Weise an der Stelle des optischen Übertragungssystems erzeugt bzw. in die optische Faser kontrodirektional eingekoppelt, an der die Verbesserung der Signalqualität des optischen modulierten Übertragungssignals erfolgen soll. Dadurch entfällt eine Rückkopplung des rückgestreuten, frequenzverschobenen optischen Signals über eine separat angeordnete Rückkoppelfaser, welche bei bereits bestehenden optischen Übertragungssystemen zusätzlich verlegt werden muß.

Ein weiterer wesentlicher Aspekt des erfindungsgemäßen Verfahrens ist darin zu sehen, daß die Frequenzdifferenz zwischen dem Trägersignal und dem optischen Signal gemessen wird und abhängig davon die Frequenz des optischen Signals geregelt wird. Zusätzlich werden die Frequenz und die Leistung des optischen Signals variiert und auf ein maximales Extinktionsverhältnisses des modulierten optischen Übertragungssignals geregelt. Mit Hilfe der erfindungsgemäßen Regelung kann das in der Signalerzeugungseinheit erzeugte optische Signal derart geregelt werden, daß das optische modulierte Übertragungssignal ein hohes Extinktionsverhältnis aufweist.

Weitere vorteilhafte Ausgestaltungen der Erfindung, insbesondere eine Anordnung zur Verbesserung des Signalqualität und eine zweite Variante des erfindungsgemäßen Verfahrens, sind den weiteren Ansprüchen zu entnehmen.

Anhand geeigneter Ausführungsbeispiele wird im folgenden die Erfindung durch zwei Prinzipschaltbilder näher erläutert.
- Figur 1: zeigt den prinzipiellen Aufbau einer optischen Übertragungsstrecke mit der erfindungsgemäßen Anordnung zur Verbesserung der Signalqualität eines modulierten Übertragungssignals,
- Figur 2: zeigt eine alternative Ausführungsform der erfindungsgemäßen Anordnung zur Verbesserung der Signalqualität eines modulierten Übertragungssignals und die
- Figuren 3a,3b: zeigen jeweils in einem Diagramm den erfindungsgemäßen Verlauf der für die Variation der Frequenz der optischen Pumpsignale erforderlichen Ansteuersignale über der Zeit.

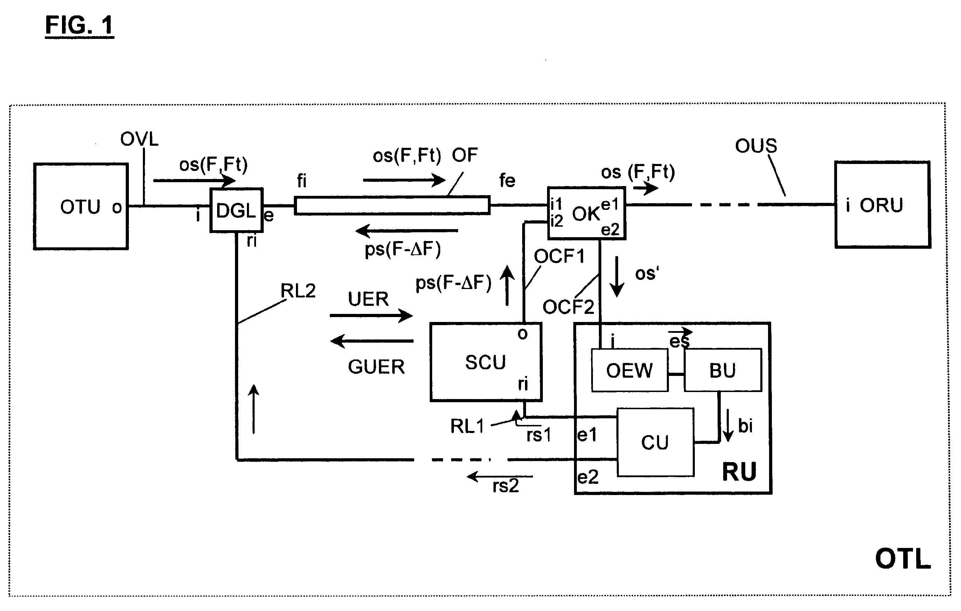

In Figur 1 ist beispielsweise in einem Blockschaltbild eine optische Übertragungsstrecke OTL dargestellt, welche eine optische Sendeeinheit OTU, eine optische Empfangseinheit ORU, ein regelbares Dämpfungsglied DGL, eine optische Faser bzw. Übertragungsfaser OF sowie eine optische Koppeleinheit OK, eine Signalerzeugungseinheit SCU und eine Regeleinheit RU aufweist. Die optische Sendeeinheit OTU weist einen Ausgang o auf, der über eine optische Verbindungsleitung OVL an den Eingang i des regelbaren Dämpfungsgliedes DGL angeschlossen ist. Zwischen der optischen Sendeeinheit OTU und dem regelbaren Dämpfungsglied DGL kann beispielsweise ein optischer Isolator eingeschaltet sein - in Figur 1 nicht dargestellt. Das regelbare Dämpfungsglied DGL weist einen Ausgang e und einen Regeleingang ri auf, wobei an den Ausgang e der Fasereingang fi der optischen Übertragungsfaser OF und an den Regeleingang ri über eine zweite Regelleitung RL2 die Regeleinheit RU angeschlossen ist.

An den Faserausgang fe der optischen Übertragungsfaser OF ist die einen ersten, zweiten Eingang i1, i2 sowie einen ersten und zweiten Ausgang e1, e2 aufweisende optische Koppeleinheit OK angeschlossen, wobei beispielsweise der Faserausgang fe an den ersten Eingang i1 der optischen Koppeleinheit OK angeschlossen ist. Der erste Ausgang e1 der optischen Koppeleinheit OK ist über eine optische Übertragungsstreckenfaser OUS mit dem Eingang i der optischen Empfangseinheit ORU verbunden, wobei mit Hilfe der strichliert gezeichneten Linie die beispielsweise mehrere hundert Kilometer betragende Länge der optischen Übertragungsstreckenfaser OUS angedeutet werden soll. Des Weiteren ist die einen Regeleingang ri und einen Ausgang o aufweisende Signalerzeugungseinheit SCU über eine erste optische Koppelfaser OCF1 an den zweiten Eingang i2 der optischen Koppeleinheit OK angeschlossen. Zusätzlich ist die einen Eingang i, einen ersten und zweiten Ausgang e1, e2 aufweisende Regeleinheit RU bzw. dessen Eingang i über eine zweite optische Koppelfaser OCF2 mit dem zweiten Ausgang e2 der optischen Koppeleinheit OK verbunden.

Die Regeleinheit RU weist beispielhaft eine opto-elektrische Wandlereinheit OEW, eine Bewertungseinheit BU sowie eine Kontrolleinheit CU auf, wobei die opto-elektrische Wandlereinheit OEW mit dem Eingang i der Regeleinheit RU verbunden ist sowie an die Bewertungseinheit BU angeschlossen ist. Die Bewertungseinheit BU ist mit der Kontrolleinheit CU sowie mit dem ersten und zweiten Ausgang e1, e2 der Regeleinheit RU verbunden. Des Weiteren ist der erste Ausgang e1 der Regeleinheit RU über eine erste Regelleitung RL1 mit dem Regeleingang ri der Signalerzeugungseinheit SCU verbunden. Der zweite Ausgang e2 der Regeleinheit RU ist wie bereits erwähnt über die zweite Regelleitung RL2 mit dem Regeleingang ri des regelbaren Dämpfungsgliedes DGL verbunden.

In der optischen Sendeeinheit OTU wird ein moduliertes, beispielsweise amplitudenmoduliertes optisches Übertragungssignal os mit einer Frequenz F erzeugt und am Ausgang o der optischen Sendeeinheit OTU an die optische Verbindungsleitung OVL abgegeben, über die das modulierte optische Übertragungssignal os an den Eingang i des optischen regelbaren Dämpfungsglieds DGL weitergeleitet wird. Die Modulation des optischen Übertragungssignal os kann beispielsweise als Amplitudenmodulation oder Winkelmodulation ausgestaltet sein. Das modulierte optische Übertragungssignal os kann zusätzlich mit Hilfe beispielsweise eines optischen Isolators in Übertragungsrichtung UER isoliert werden - nicht in Figur 1 dargestellt.

Mit Hilfe des regelbaren Dämpfungsgliedes DGL wird die Amplitude oder die Leistung des modulierten optischen Übertragungssignals os nach Maßgabe des an den Regeleingang ri gesteuerten zweiten Regelsignals rs2 gedämpft und das gedämpfte optische modulierte Übertragungssignal os an den Ausgang e der regelbaren Dämpfungseinheit bzw. des regelbaren Dämpfungsgliedes DGL übertragen. Vom Ausgang e des regelbaren Dämpfungsgliedes DGL wird das modulierte optische Übertragungssignal os an den Fasereingang fi der optischen Übertragungsfaser OF weitergeleitet und über die optische Übertragungsstrecke OTL übertragen.

Am Ausgang bzw. am Faserausgang fe der optischen Übertragungsfaser OF wird das modulierte optische Übertragungssignal os an den ersten Eingang i1 der optischen Koppeleinheit OK übermittelt. Mit Hilfe der optischen Koppeleinheit OK wird ein Teil des optischen modulierten Übertragungssignals os' ausgekoppelt und der beispielsweise 97% des übertragenen optischen modulierten Übertragungssignales os darstellende Haupteil wird vom ersten Ausgang e1 der optischen Koppeleinheit OK über die optische Übertragungsstreckenfaser OUS an den Eingang i der optischen Empfangseinheit ORU übertragen.

Der ausgekoppelte Teil des modulierten optischen Übertragungssignales os' wird über die zweite optische Koppelfaser OCF2 vom zweiten Ausgang e2 der optischen Koppeleinheit OK an den Eingang i der Regeleinheit RU übertragen. In der Regeleinheit RU wird das am Eingang i empfangene optische Übertragungssignal os' mit Hilfe einer opto-elektrischen Wandlereinheit OEW in ein elektrisches Signal es umgesetzt, welches an die Bewertungseinheit BU der optischen Regeleinheit RU übertragen wird. Mit Hilfe der Bewertungseinheit BU wird die Leistung des Trägeranteils oder die Amplitude des Trägeranteils Ft des optischen modulierten Übertragungssignals os ermittelt sowie die Gesamtleistung des optischen modulierten Übertragungssignals os bestimmt. Zusätzlich kann auch die Leistung der Seitenbandsignale ermittelt werden. Zur Ermittlung der Leistung des Trägersignals wird beispielsweise durch eine Filtereinheit - nicht dargestellt - der Trägeranteil des elektrischen Signals es ermittelt und anschließend dessen Leistung bestimmt. Zusätzlich wird das Extinktionsverhältnis, d.h. das Verhältnis der binären "1"-Signalleistung zur binären "0"-Signalleistung, des elektrischen Signals es ermittelt.

Die in der Bewertungseinheit BU ermittelte Leistung des Trägersignals Ft und die Gesamtleistung des modulierten optischen Übertragungssignals os werden mit Hilfe von Bewertungssignalen bi an die Kontrolleinheit CU weitergeleitet. In der Kontrolleinheit CU werden die Bewertungssignale bi zur Bildung eines ersten und zweiten Regelsignales rs1, rs2 weiterverarbeitet. Beispielsweise kann ein Regelung anhand der Leistung der Grundwelle der Bewertungssignale bi erfolgen. Das in der Kontrolleinheit CU der Regeleinheit RU gebildete erste Regelsignal rs1 wird vom ersten Ausgang e1 der Regeleinheit RU über die erste Regelleitung RL1 an den Regeleingang ri der Signalerzeugungseinheit SCU übertragen. Das zweite in der Kontrolleinheit CU der Regeleinheit RU gebildete Regelsignal rs2 wird vom zweiten Ausgang e2 der Regeleinheit RU über die zweite Regelleitung RL2 an den Regeleingang ri des regelbaren Dämpfungsgliedes DGL übermittelt.

Zur optimalen Filterung bzw. Reduzierung des Trägersignalanteils Ft aus dem optischen modulierten Übertragungssignal os(F,Ft) ist eine Regelung der regelbaren Signalerzeugungseinheit SCU vorgesehen, durch die das optische Signal ps(F-ΔF) hinsichtlich seiner Frequenz und Leistung geregelt wird und somit die Verstärkung des optischen Signals ps(F-ΔF) in der optischen Übertragungsfaser OF durch die stimulierte Brillouin Streuung bzw. auf Kosten der Leistung des Trägersignalanteils Ft des modulierten optischen Übertragungssignals os(F,Ft) maximiert werden kann.

Das in der Regeleinheit RU gebildete erste Regelsignal rs1 wird in der Signalerzeugungseinheit SCU zur Regelung der Frequenz und Leistung des in der regelbaren Signalerzeugungseinheit SCU erzeugten optischen Signals ps(F-ΔF) eingesetzt.
Bei einer derartigen Frequenzregelung wird das Vorzeichen der Frequenzabweichung des optischen Signals ps(F-ΔF) von der Frequenz F-ΔF durch "Wobbeln" (Periodisches Ändern der Frequenzverschiebung um einen kleinen Betrag durch Wobbelspannungen) ermittelt und anhand dessen beispielsweise eine Frequenzregelung nach dem "Lock-In-Prinzip" durchgeführt. Das erzeugte optische Signal ps(F-ΔF) weist somit eine Frequenz F-ΔF auf, welche eine Verschiebung um ΔF hinsichtlich der Frequenz F des amplitudenmodulierten optischen Übertragungssignales os(F) darstellt. Vorzugsweise weist das optische Signal ps(F-ΔF) eine um die Brillouin-Frequenzverschiebung ΔF ( ca. 10 bis 13 GHz ) kleinere Frequenz als die Trägersignalfrequenz Ft des optischen modulierten Übertragungssignales os(F,Ft) auf, d.h. der Frequenzunterschied von ΔF liegt beispielsweise im Bereich vom 10 bis 13 GHz. Dieser Frequenzunterschied ΔF ist auf den nichtlinearen Effekt der stimulierten Brillouin Streuung abgestimmt, welcher beim erfindungsgemäßen Verfahren zur Verbesserung der Signalqualität durch die Reduktion des Trägersignals Ft zur Verstärkung des optischen Signals os(F,Ft) "ausgebeutet" wird. Aus diesem Grunde wird das optische Signal ps(F-ΔF) vom Ausgang o der regelbaren Signalerzeugungseinheit SCU an den zweiten Eingang i2 der optischen Koppeleinheit OK übertragen, mit deren Hilfe das optische Signal ps(F-ΔF) am Faserausgang fe in die optische Übertragungsfaser OF in Gegenübertragungsrichtung GUER, d.h. kontradirektional, eingekoppelt wird. Das optische Signal ps(F-ΔF) breitet sich somit entgegengesetzt zum optischen modulierten Übertragungssignal os(F,Ft) in der optischen Übertragungsfaser OF aus.

Mit Hilfe des am Faserende fe der optischen Übertragungsfaser OF eingekoppelten optischen Signals ps(F-ΔF) wird der nichtlineare Effekt der stimulierten Brillouin Streuung in der optischen Übertragungsfaser OF verstärkt, wodurch erfindungsgemäß der Trägersignalanteil Ft des modulierten optischen Übertragungssignals os(F,Ft) zur Verstärkung des optischen Signals ps(F-ΔF) aufgrund der stimulierten Brillouin Streuung reduziert wird, d.h. der Trägersignalanteil Ft des optischen modulierten Übertragungssignals os(F,Ft) wird verringert und somit ein höheres Extinktionsverhältnis des optischen modulierten Übertragungssignales os(F,Ft) realisiert.

Anstelle der optischen Übertragungsfaser OF kann auch eine optische Spezialfaser mit einer hohen Effizienz und einer geringen Linienbreite hinsichtlich der stimulierten Brillouin Streuung vorgesehen sein - in Figur 1 nicht dargestellt.

Des Weiteren wird mit Hilfe des in der Regeleinheit RU gebildeten, zweiten Regelsignales rs2 das regelbare Dämpfungsglied DGL derart geregelt, daß die Leistung bzw. Amplitude des modulierten optischen Übertragungssignals os(F,Ft) hinsichtlich der Reduzierung des Trägersignalanteils Ft einen optimalen Wert aufweist. Bei einem optischen modulierten NRZ-Übertragungssignal weist idealer Weise beispielsweise der Trägersignalanteil und die beiden Seitenbandsignale nahezu dieselbe Leistung auf. Hierbei wird insbesondere vermieden, daß die Amplitude bzw. die Leistung des modulierten optischen Übertragungssignals os(F,Ft) die für das Einsetzen des nicht-linearen Effekts der stimulierten Brillouin Streuung erforderliche kritische Signalleistung nicht überschreitet. Analog hierzu könnte auch eine Regelung der optischen Sendeeinheit OTU mit Hilfe des zweiten Regelsignales rs2 durchgeführt werden, so daß durch die Signalleistung des erzeugten optischen Übertragungssignal os(F,Ft) die für das Einsetzen der stimulierten Brillouin Streuung erforderliche kritische Signalleistung bereits in der optischen Sendeeinheit OTU nicht überschritten wird.

Zusätzlich wird zur Regelung der Frequenz des optischen Signals ps über beispielsweise das erste Regelsignal rs1 die Frequenzdifferenz des Trägersignals Ft und des optischen Signals ps in der Kontrolleinheit CU ermittelt und hinsichtlich der einzustellenden Brilloinverschiebung ΔF geregelt.

Regelbare optische Signalerzeugungseinheiten SCU, insbesondere Lasereinheiten, sind hinsichtlich ihrer Signalleistung nur beschränkt regelbar, wobei beispielsweise Leistungspegeländerungen um ca. 10 db möglich sind. Deshalb ist es erforderlich, um eine höhere effektive Leistungsbandbreite einstellen zu können, das die Leistung des optischen Übertragungssignals os(F,Ft) durch das regelbare Dämpfungsglied DGL gedämpft werden kann. Durch die Kombination der regelbaren optischen Signalerzeugungseinheit SCU und des regelbaren optischen Dämpfungsgliedes DGL ist eine Optimierung der erfindungsgemäßen Filterung bzw. Reduzierung des Trägeranteils möglich.

Der Effekt der Reduzierung des Trägersignalanteils Ft des optischen modulierten Übertragungssignals os(F,Ft) kann somit als eine Filterung mit einem mit Hilfe der stimulierten Brillouin Streuung realisierten, schmalbandigen optischen Filter betrachtet werden, welches beispielsweise eine Bandbreite von < 100 MHz aufweist und mit Hilfe der Regeleinheit RU hinsichtlich seiner Mittenfrequenz und Sperrdämpfung regelbar ist.

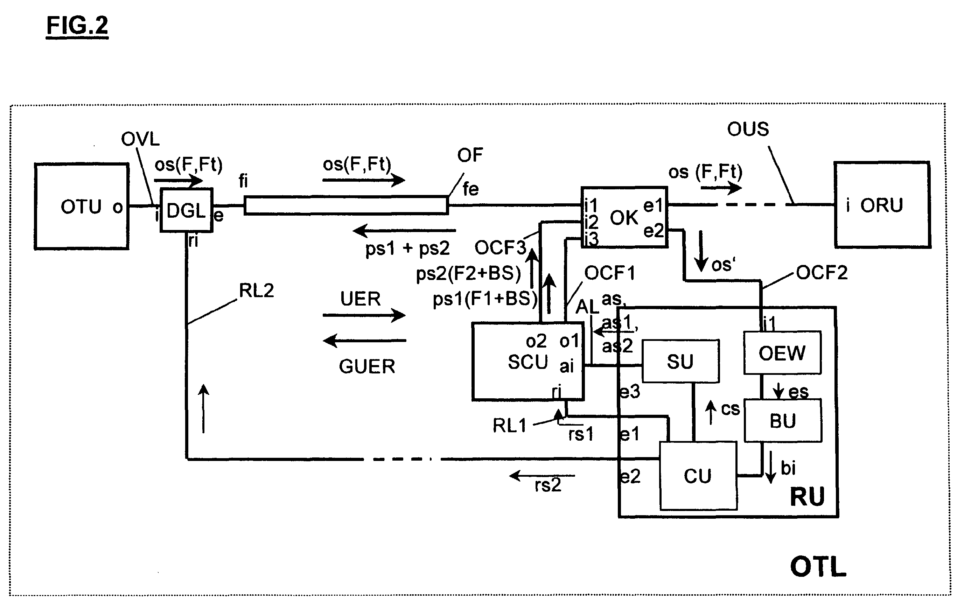

In Figur 2 ist eine weitere Ausgestaltung des erfindungsgemäßen Verfahrens dargestellt, wobei hierbei eine optische Übertragungsstrecke OTL zur Übertragung des modulierten optischen Übertragungssignals os(F,Ft) eingesetzt wird, bei der im Gegensatz zum ersten Ausführungsbeispiel beispielsweise ein erstes und ein zweites optisches Pumpsignal ps1(F1+BS), ps2(F2+BS) am Faserausgang fe der optischen Übertragungsfaser OF in Gegenübertragungsrichtung GUER eingekoppelt werden. Hierzu weist die in Figur 2 dargestellte optische Koppeleinheit OK einen zweiten und dritten Eingang e2,e3 auf, über den die in der Signalerzeugungeinheit SCU erzeugten ersten und zweiten optischen Pumpsignale ps1(F1+BS), ps2(F2+BS) in die optische Faser OF eingekoppelt werden. Zusätzlich ist in der Regeleinheit RU eine Signaleinheit SU zur Erzeugung von Ansteuersignalen as,as1,as2 vorgesehen. Die weiteren in Figur 2 dargestellten Einheiten bzw. Blöcke stimmen mit dem in Figur 1 dargestellten Ausführungsbeispiel überein.

In dem in Figur 2 dargestellten Ausführungsbeispiel werden das erste und zweite optische Pumpsignal ps1(F1+BS), ps2(F2+BS), welche ebenfalls in der Signalerzeugungseinheit SCU erzeugt werden, über die optische Koppeleinheit OK am Faserausgang fe der optischen Übertragungseinheit OF in Gegenübertragungsrichtung GUER eingespeist. Das erste und zweite optische Pumpsignal ps1(F1+BS), ps2(F2+BS) weisen Frequenzen auf, die hinsichtlich der Frequenzen F1, F2 des symmetrisch zum Trägersignal liegenden ersten Seitenband USB,OSB um die Brillouinfrequenzverschiebung BS (ca. 10 bis 13 GHz) erhöht sind. Die Frequenz des ersten und zweiten optischen Pumpsignals ps1(F1+BS), ps2(F2+BS) wird beispielsweise innerhalb der Frequenzen des unteren und oberen ersten Seitenbandes bzw. der Seitenbandsignale USB',OSB', welche um die Brillouinfrequenzverschiebung bzw. Brillouin-Shift BS erhöht sind, variiert, d.h. die Frequenz des ersten bzw. zweiten optischen Pumpsignals ps1(F1+BS), ps2(F2+BS) durchläuft innerhalb eines Zeitintervalls t2 den kompletten Frequenzbereich des jeweiligen oberen bzw. unteren Seitenbandes USB',OSB'. Das erste und zweite optische Pumpsignal ps1(F1+BS), ps2(F2+BS) sind somit zur Verstärkung der ersten Seitenbandsignale USB,OSB des optischen Übertragungssignals os(F,Ft) unter Ausnützung des nicht-linearen Effektes des Stimulierten Brillouin Streuung vorgesehen. Hierzu durchläuft beispielsweise das das untere Seitenband USB verstärkende erste optische Pumpsignal ps1(F1+BS) mit einer Wiederholungsfrequenz von ca. 10 KHz das um die Brilloin-Shift BS erhöhte untere Seitenband USB', d.h. das erste optische Pumpsignal ps1(F1+(F) nimmt innerhalb der Periode t1 sämtliche Frequenzen von der kleinsten Frequenz des unteren Seitenbands USB' bis zur größten Frequenz des unteren Seitenband USB' an.

Analog zu der Regelung in Figur 1 wird wiederum mit Hilfe der Regeleinheit RU das eingekoppelte erste und zweite optische Pumpsignal ps1(F1+BS), ps2(F2+BS) in Frequenz und Leistung geregelt und somit eine optimale Verstärkung des unteren und oberen Seitenbandes USB,OSB des modulierten optischen Übertragungssignals os(F,Ft) aufgrund der in der optischen Übertragungsfaser OF sich ausbildenden stimulierten Brillouin Streuung erzielt. Hierzu wird in der Bewertungseinheit BU die Gesamtleistung und das Extinktionsverhältnis des elektrischen Signals es ermittelt und in Form von Bewertungssignalen bi an die Kontrolleinheit CU zugeführt. Mit Hilfe der Bewertungssignale bi werden wiederum ein erstes und zweites Regelsignal rs1, rs2 in der Kontrolleinheit CU gebildet und an die regelbare optische Signalerzeugungseinheit SCU bzw. an das regelbare Dämpfungsglied DGL übermittelt.

In der regelbaren optischen Signalerzeugungseinheit SCU ist zusätzlich zur Erzeugung beispielsweise eines Ansteuersignals as oder eines ersten und zweiten Ansteuersignals as1,as2 eine Signaleinheit SU vorgesehen, welche mit der Kontrolleinheit CU und mit dem dritten Ausgang e3 der Regeleinheit RU verbunden ist. Entsprechend ist der dritte Ausgang e3 der Regeleinheit RU über eine Ansteuerleitung AL mit dem Ansteuereingang ai der Signalerzeugungseinheit SCU verbunden.

Nach Auswertung der Bewertungssignale bi in der Kontrolleinheit CU wird die Erzeugung der Ansteuersignale as,as1,as2 in der Signaleinheit SU mit Hilfe von in Kontrolleinheit CU gebildeten Steuersignalen cs gesteuert und somit die in der Signaleinheit SU gebildeten Ansteuersignale as,as1,as2 an den ermittelten Betriebszustand des optischen Übertragungsstrecke OTL angepaßt. Das erste und zweite Ansteuersignal as1,as2 wird über den dritten Ausgang e3 und die Ansteuerleitung AL an den Ansteuereingang ai der Signalerzeugungseinheit SCU übermittelt. In der Signalerzeugungseinheit SCU werden gemäß dem ersten und zweiten Ansteuersignal as1,as2 die Frequenzen F1,F2 des ersten und zweiten optischen Pumpsignals ps1(F1+BS), ps2(F2+BS) variiert.

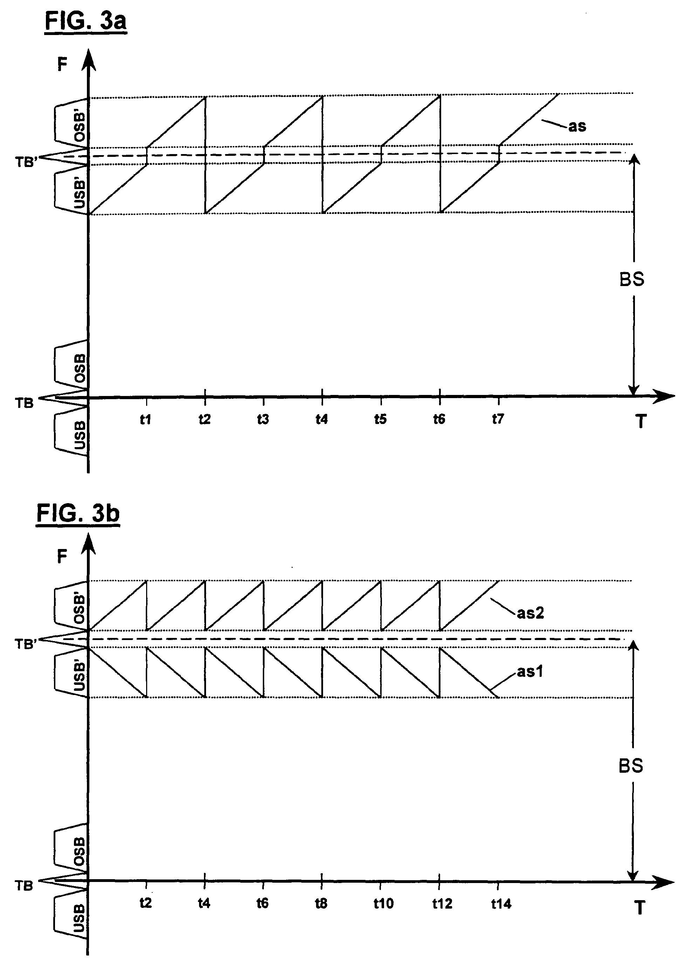

In den Figuren 3a und 3b sind jeweils in einem Diagramm mögliche Ansteuersignale as,as1,as2 dargestellt, wobei in Figur 3a ein einziges Ansteuersignal as zur Variation der Frequenz nur eines optischen Pumpsignals ps und in Figur 3b ein erstes und ein zweites Ansteuersignal as1,as2 zur getrennten Variation der Frequenzen eines ersten und zweiten optischen Pumpsignals ps1,ps2 aufgezeigt sind. An der Abszisse der Diagramme ist die Zeit T und an der Ordinate die Frequenz F aufgetragen, d.h. in den Diagrammen wird die Variation der Frequenz F über der Zeit T dargestellt. Zusätzlich liegt der Nullpunkt der Ordinate F bei der Trägerfrequenz Ft des optischen modulierten Übertragungssignals os(F,Ft), dessen unteres und oberes erstes Seitenband USB,OSB in Figur 3a und 3b mit Hilfe von trapezförmigen Kästchen angedeutet sind. Entsprechend sind die um die Brillouinfrequenzverschiebung BS erhöhten unteren und oberen ersten Seitenbänder USB',OSB' im Abstand der Brillouinfrequenzverschiebung BS entfernt von der Abszisse dargestellt.

Das in Figur 3a dargestellte Ansteuersignal as weist einen "sägezahnartigen" Verlauf auf. Das Ansteuersignal as steigt beispielhaft von der kleinsten Frequenz des um die Brillouin Shift BS erhöhten unteren Seitenbandes USB' bis zu der größten Frequenz des um die Brillouin Shift BS erhöhten unteren Seitenbandes USB' linear an, überspringt den ebenfalls um die Brillouin Shift BS erhöhten Trägersignalfrequenzbereich TB' und setzt den linearen Anstieg von der kleinsten Frequenz zur größten Frequenz des um die Brillouin Shift BS erhöhten oberen Seitenbandes OSB' fort. Dieses Durchlaufen des unteren und oberen erhöhten Seitenbandes USB',OSB' erfordert beispielhaft eine Zeitspanne von t1+t2, welche beispielsweise im Bereich von 10⁻⁴ Sekunden liegt. Nach Erreichen der größten Frequenz des um die Brillouin Shift BS erhöhten oberen Seitenbandes OSB' nimmt das Ansteuersignal as den Anfangswert, d.h. die kleinste Frequenz des um die Brillouin Shift BS erhöhten unteren Seitenbandes USB', an und steigt wiederum linear an. Mit Hilfe eines derartigen Ansteuersignals as wird die Frequenz dss optischen Pumpsignals ps(F,BS) periodisch über den zur Verstärkung des unteren und oberen Seitenbandes USB,OSB des optischen modulierten Übertragungssignals os(F,Ft) erforderlichen Frequenzbereich durchgestimmt.

Analog hierzu werden beim Einsatz eines ersten und zweiten optischen Pumpsignals ps1(F1,BS),ps2(F2,BS) ein erstes und zweites optisches Ansteuersignal as1,as2 zur getrennten Variation der Frequenzen des ersten und zweiten optischen Pumpsignals ps1(F1,BS),ps2(F2,BS) eingesetzt, welche in Figur 3b beispielhaft dargestellt sind. Das erste Ansteuersignal as1 fällt linear von der größten Frequenz des um die Brillouin Shift BS erhöhten unteren Seitenbandes USB' bis zu der kleinsten Frequenz des um die Brillouin Shift BS erhöhten unteren Seitenbandes USB' innerhalb der Zeitspanne t2 ab. Im Anschluß daran nimmt das erste Ansteuersignal as1 wiederum seinen Startwert, d.h. die größte Frequenz des um die Brillouin Shift BS erhöhten unteren Seitenbandes USB', an und fällt wieder linear ab. Somit ergibt sich auch eine sägezahnartige Struktur für das erste Ansteuersignal as1. Das zweite Ansteuersignal as2 verläuft symmetrisch zu dem erhöhten Trägersignalfrequenzbereich TB', d.h. das zweite Ansteuersignal as2 steigt linear von der kleinsten Frequenz zur größten Frequenz des um die Brillouin Shift BS erhöhten oberen Seitenbandes OSB' an. Nach Durchlaufen des erhöhten oberen Seitenbandes OSB' wird das zweite Ansteuersignal as2 vom Zeitpunkt t2 auf den Startwert zurückgesetzt und der dargestellte Verlauf setzt sich periodisch fort.

Der in den Figuren 3a und 3b dargestellte "sägezahnförmige" Verlauf der Ansteuersignale as,as1,as2 führt aufgrund der im Frequenzbereich nahezu konstanten Kennlinie zu einer nahezu konstanten Verstärkung der ersten Steitenbandsignale bzw. der ersten Seitenbänder USB,OSB. Jedoch kann durch eine gezielte Formung des Verlaufs der Ansteuersignale as,as1,as2 eine Änderung des Verstärkungsspektrums durchgeführt werden, so daß beispielsweise die Randfrequenzen des ersten Seitenbandes USB,OSB eine höhere Verstärkung erfahren als die Mittenfrequenzen des ersten Seitenbandes USB,OSB. Das erfindungsgemäße Verfahren ist somit keinesfalls auf "sägezahnförmige" Ansteuersignale as,as1,as2 beschränkt, sondern mit Hilfe von beliebige Verläufe aufweisenden Ansteuersignalen as,as1,as2 durchführbar.

## Patentansprüche

1. Verfahren zur Verbesserung der Signalqualität eines modulierten, ein Trägersignal (Ft) aufweisenden optischen Übertragungssignals (os),
**dadurch gekennzeichnet,**
**daß** in einer Signalerzeugungseinheit (SCU) mindestens ein optisches Signal (ps) mit einer hinsichtlich der Trägersignalfrequenz (Ft) um die Brillouin-Frequenzverschiebung (ΔF) reduzierten Frequenz erzeugt wird, welches in die optische Übertragungsfaser (OF) entgegen der Übertragungssignalrichtung (GUER) eingekoppelt wird, so daß das Trägersignal (Ft) des modulierten optischen Übertragungssignals (os) reduziert wird.

2. Verfahren nach Anspruch 1,
**dadurch gekennzeichnet,**
**daß** das erzeugte optische Signal (ps) mit einer Amplitude oder Leistung eingekoppelt wird, die unterhalb der kritischen SBS-Schwellenleistung liegt.

3. Verfahren nach Anspruch 1 oder 2,
**dadurch gekennzeichnet,**
**daß** die Erzeugung des optischen Signals (ps) in einer räumlich getrennt von der zur Erzeugung des optischen Übertragungssignals (os) vorgesehenen optischen Sendeeinheit (OTU) angeordneten Signalerzeugungseinheit (SCU) durchgeführt wird.

4. Verfahren nach einem der Ansprüche 1 bis 3,
**dadurch gekennzeichnet,**
**daß** die Frequenzdifferenz zwischen dem Trägersignal (Ft) und dem optischen Signal (ps) gemessen wird und abhängig davon die Frequenz (F) des optischen Signals (ps) geregelt wird.

5. Verfahren nach einem der Ansprüche 1 bis 4,
**dadurch gekennzeichnet,**
**daß** die Frequenz und die Leistung des optischen Signals (ps) variiert wird und auf ein maximales Extinktionsverhältnis des modulierten optischen Übertragungssignals (os) geregelt wird.

6. Verfahren nach einem der Ansprüche 1 bis 6,
**dadurch gekennzeichnet,**
**daß** das modulierte optische Übertragungssignal (os) vor der Einkopplung in die optische Übertragungsfaser (OF) mit Hilfe eines optischen Dämpfungsgliedes (DGL) gedämpft wird.

7. Verfahren nach Anspruch 6,
**dadurch gekennzeichnet,**
**daß** die Amplitude oder Leistung des Trägersignals (Ft) des modulierten optischen Übertragungssignals (os) gemessen wird und abhängig davon das Dämpfungsverhalten des Dämpfungsgliedes (DGL) geregelt wird.

8. Anordnung zur Verbesserung der Signalqualität eines in einer optischen Sendeeinheit (OTU) erzeugten, modulierten, ein Trägersignal (Ft) aufweisenden optischen Übertragungssignals (os), welches über eine optische Übertragungsfaser (OF) übertragen wird,
**dadurch gekennzeichnet,**
**daß** eine Signalerzeugungseinheit (SCU) zur Erzeugung eines optisches Signals (ps) mit einer hinsichtlich der Trägersignalfrequenz (Ft) um die Brillouin-Frequenzverschiebung (ΔF) reduzierten Frequenz vorgesehen ist,
**daß** eine optische Koppeleinheit (OK) zum Auskoppeln eines Teils des übertragenen optischen modulierten Übertragungssignals (os') und zur Einkopplung des optischen Signals (ps) in Gegenübertragungsrichtung (GUER) in die optische Übertragungsfaser (OF) vorgesehen ist, wobei durch das eingekoppelte optische Signal (ps) das Trägersignal (Ft) des modulierten optischen Übertragungssignals (os) reduziert wird,
**daß** eine Regeleinheit (RU) zur Ermittlung der Amplitude oder Leistung des Trägersignals (Ft) des modulierten optischen Übertragungssignals (os) und zur Bildung mindestens eines Regelungsignals (rs1,rs2) vorgesehen ist, wobei die Signalerzeugungseinheit (SCU) mit Hilfe des gebildeten mindestens einen Regelsignals (rs1) hinsichtlich der Frequenz und Leistung des erzeugten optischen Signals (ps) geregelt wird.

9. Anordnung nach Anspruch 8,
**dadurch gekennzeichnet,**
**daß** der optischen Übertragungsfaser (OF) ein optisches Dämpfungsglied (DGL) zur Dämpfung des modulierten optischen Übertragungssignals (os) vor der Einkopplung in die optische Übertragungsfaser (OF) vorgeschaltet ist.

10. Verfahren zur Verbesserung der Signalqualität eines modulierten, ein Trägersignal (Ft) aufweisenden optischen Übertragungssignals (os),
**dadurch gekennzeichnet,**
**daß** in einer Signalerzeugungseinheit (SCU) mindestens ein optisches Pumpsignal (ps1,ps2) erzeugt wird, dessen Frequenz über die symmetrisch zu dem Trägersignal (Ft) liegenden und um die Brillouinfrequenzverschiebung (BS) erhöhten Frequenzen des ersten Seitenbandes (USB',OSB') des optischen modulierten Übertragungssignals(os) variiert wird, wobei das mindestens eine optische Pumpsignal (ps1,ps2) keine der um die Brillouinfrequenzverschiebung (BS) erhöhten Frequenzen des Trägersignalfrequenzbereiches (TB) annimmt,
**daß** das mindestens eine optische Pumpsignal (ps1,ps2) in die optische Übertragungsfaser (OF) entgegen der Übertragungssignalrichtung (GUER) eingekoppelt wird, so daß die ersten Seitenbandsignale (USB,OSB) des modulierten optischen Übertragungssignals (os) eine Verstärkung erfahren.

11. Verfahren nach Anspruch 10,
**dadurch gekennzeichnet,**
**daß** ein erstes und zweites optisches Pumpsignal (ps1,ps2) in der Signalerzeugungseinheit (SCU) zur getrennten Verstärkung des oberhalb und des unterhalb des Trägersignalfrequenzbereichs (TB) liegenden ersten oberen und unteren Seitenbandes (USB,OSB) erzeugt werden, wobei die Frequenz des ersten optischen Pumpsignals (ps1) über den Frequenzen des unteren ersten Seitenbandes (USB') und die Frequenz des zweiten optischen Pumpsignals (ps2) über den Frequenzen der oberen ersten Seitenbandes (OSB') variiert wird.

12. Verfahren nach Anspruch 10 oder 11,
**dadurch gekennzeichnet,**
**daß** die Variation der Frequenzen der optischen Pumpsignale (ps1,ps2) mit Hilfe von in der Regeleinheit (RU) erzeugten Ansteuersignalen (as,as1,as2) durchgeführt wird, die eine mindestens im Kiloherzbereich liegende Wiederholungsfrequenz aufweisen.

13. Verfahren oder Anordnung nach einem der vorhergehenden Ansprüche,
**dadurch gekennzeichnet,**
**daß** das optische Übertragungssignal (os) vor der Übertragung amplitudenmoduliert oder winkelmoduliert wird.

14. Verfahren oder Anordnung nach einem der vorhergehenden Ansprüche,
**dadurch gekennzeichnet,**
**daß** anstelle der optischen Übertragungsfaser (OF) eine optische Spezialfaser mit einer hohen Effizienz und einer geringen Linienbreite hinsichtlich der stimulierten Brillouin Streuung vorgesehen ist.
